# EUROPÄISCHE PATENTSCHRIFT

(11) **EP 0 967 181 B1**
(45) Veröffentlichungstag und Bekanntmachung des Hinweises auf die Patenterteilung: **22.08.2001**
(21) Anmeldenummer: 99111642.7
(22) Anmeldetag: 16.06.1999
(51) Int. Cl.: C03B 19/14, C03B 37/014

(54) **Verfahren und Vorrichtung für die Herstellung einer porösen SiO2-Vorform**
Process and apparatus for the production of a porous silica preform
Procédé et dispositif pour la fabrication d'une préforme en silice poreuse

(30) Priorität: 25.06.1998 DE 19827945
(43) Veröffentlichungstag der Anmeldung: 29.12.1999
(73) Patentinhaber: Heraeus Quarzglas GmbH & Co. KG, 63450 Hanau (DE)
(72) Erfinder: Fritsche, Hans-Georg, 06766 Bobbau (DE); Peper, Udo, 06295 Lutherstadt Eisleben (DE); Neubauer, Frank, Beaconsfield HP9 1EJ, Bucks (GB); Schaper, Hartwig, Dr., 63741 Aschaffenburg (DE); Röper, Jürgen, Dr., 06809 Roitzsch (DE)
(74) Vertreter: Staudt, Armin Walter

(56) Entgegenhaltungen:
- EP-A- 0 476 218
- EP-A- 0 845 441
- DE-A- 19 628 958
- DE-A- 19 629 170
- PATENT ABSTRACTS OF JAPAN vol. 17, no. 367, 12. Juli 1993 (1993-07-12) & JP 05 058647 A (SHIN-ETSU QUARTZ PROD. CO. LTD.), 9. März 1993 (1993-03-09)

## Beschreibung

Die vorliegende Erfindung betrifft ein Verfahren zur Herstellung einer länglichen, porösen SiO₂-Vorform, durch Abscheiden von SiO₂-Partikeln auf der Zylindermantelfläche eines um seine Längsachse rotierenden, zylinderförmigen Trägers, wobei die SiO₂-Partikel mittels einer Vielzahl von Abscheidebrennern gebildet werden, die in mindestens einer parallel zur Längsachse des Trägers verlaufenden Brennerreihe beabstandet voneinander angeordnet, zwischen Wendepunkten, an denen sich ihre Bewegungsrichtung umkehrt, in einem sich wiederholenden Bewegungszyklus entlang der sich bildenden Vorform hin- und herbewegt werden, wobei Maßnahmen zur Vermeidung oder Verminderung einer Überhitzung der sich bildenden Vorform in den Bereichen um die Wendepunkte getroffen werden.

Weiterhin betrifft die Erfindung eine Vorrichtung für die Herstellung einer porösen SiO₂-Vorform, mit einem um seine Längsachse rotierbaren, zylinderförmigen Träger, mit einer Vielzahl von Abscheidebrennern, die in mindestens einer, parallel zur Längsachse des Trägers verlaufenden Brennerreihe beabstandet voneinander angeordnet und miteinander verbunden sind, und mittels denen SiO₂-Partikel auf dem Träger unter Bildung der Vorform abgeschieden werden, und mit einer Verschiebeeinrichtung, mittels der die Abscheidebrenner entlang des Trägers zwischen Wendepunkten, an denen sich ihre Bewegungsrichtung umkehrt, hin- und herbewegt werden.

Eine Vorrichtung gemäß der eingangs genannten Gattung ist aus der EP-A1-476 218 bekannt. Darin wird die Herstellung einer länglichen, porösen Vorform aus SiO₂-Partikeln beschrieben, wobei mittels Flammhydrolyse-Brennern auf einem waagerecht orientierten, um seine Längsachse rotierenden Substratstab SiO₂-Partikel schichtweise abgeschieden werden. Die Brenner sind mit äquidistanten Abstand von 10 cm zueinander auf einem parallel zur Längsachse des Substratstabes verlaufenden Brennerblock montiert. Der Brennerblock wird entlang der sich bildenden porösen, zylinderförmigen Vorform zwischen einem linken und einem rechten Wendepunkt mittels einer regelbaren Verschiebeeinrichtung hin- und herbewegt. Die Amplitude dieser Translationsbewegung des Brennerblockes ist kleiner als die Länge der Vorform. Durch das Abbremsen der Translationsbewegung des Brennerblocks bei der Umkehr der Bewegungsrichtung im Bereich der Wendepunkte kann es dort zu einer Überhitzung der Vorformoberfläche und daher zu lokalen, axialen Dichteschwankungen in der Vorform kommen. Dadurch würden Bereiche unterschiedlicher Reaktivität in der Vorform erzeugt, die sich insbesondere bei nachfolgenden chemischen Reaktionen bei der Weiterverarbeitung der Vorform bemerkbar machen und beispielsweise nach dem Sintern der Vorform Inhomogenitäten im Quarzglaskörper hinterlassen könnten. Um dies zu vermeiden, wird in der EP-A1 476 218 vorgeschlagen, bei jedem Brennerdurchgang sowohl die rechten, als auch die linken Wendepunkte um einige Millimeter zu verlagern. Dadurch werden die an den Wendepunkten entstehenden lokalen Dichteschwankungen zwar gleichmäßig in der Vorform verteilt, jedoch nicht vermieden.

Zur Lösung dieses Problems wird in der DE-A1 196 28 958 ein gattungsgemäßes Verfahren vorgeschlagen, bei dem eine Überhitzung der Vorfom in den Bereichen um die Wendepunkte verhindert oder verringert wird, indem in diesen Bereichen die Umfangsgeschwindigkeit der sich bildenden Vorform erhöht, die Flammentemperatur der Abscheidebrenner gesenkt, oder der Abstand der Abscheidebrenner von die Vorformoberfläche vergrößert wird. Mittels jeder dieser Maßnahmen oder mittels einer Kombination der Maßnahmen kann eine Temperaturerhöhung der Vorformoberfläche im Bereich der Wendepunkte ganz oder teilweise kompensiert werden, so daß die Vorform über ihre gesamte Länge mit einer zeitlich und räumlich möglichst gleich hohen Heizleistung beaufschlagt wird. Axiale Dichtegradienten in der Vorform werden somit weitgehend vermieden.

Die örtliche Verteilung der Wendepunkte gemäß der EP-A1 476 218 erfordert einen hohen apparativen und regelungstechnischen Aufwand. Die in der DE-A1 196 28 958 zur Vermeidung lokaler Überhitzungen im Bereich der Wendepunkte vorgeschlagenen Maßnahmen verlangen eine zeitliche Veränderung von Gasflüssen, Abständen oder Relativgeschwindigkeiten im Bereich der Wendepunkte, wobei diese Maßnahmen mit einer unerwünschten Änderung der Abscheiderate einhergehen können.

Der vorliegenden Erfindung liegt daher die Aufgabe zugrunde, ein einfaches Verfahren für die Herstellung einer Vorform mit geringen Dichteschwankungen anzugeben, das die Nachteile der oben genannten Maßnahmen vermeidet, sowie eine für die Durchführung des Verfahrens geeignete, einfache Vorrichtung bereitzustellen.

Hinsichtlich des Verfahrens wird diese Aufgabe ausgehend von dem gattungsgemäßen Verfahren erfindungsgemäß dadurch gelöst, daß die Maßnahmen ein lokales Abführen von Wärme aus den Bereichen um die Wendepunkte, oder ein lokales Abschirmen der Bereiche um die Wendepunkte vor Wärme umfassen und innerhalb eines Bewegungszyklus zeitlich konstant gehalten werden.

Die Abscheidebrenner erzeugen entlang der Oberfläche der sich bildenden Vorform ein Temperaturprofil, das sich infolge der Flammentemperatur im Bereich der Oberfläche und der Hin- und Herbewegung der Brennerreihe einstellt. Dieses Oberflächentemperaturprofil weist im Bereich der Wendepunkte Spitzen auf. Bei dem erfindungsgemäßen Verfahren werden derartige Spitzen durch Maßnahmen für eine lokale Kühlung (Kühl-Maßnahmen) vermieden, indem im Bereich der Wendepunkte Wärme abgeführt oder im Bereich der Wendepunkte die sich bildende Vorform vor Wärme abgeschirmt wird. Die zuerst genannte Kühl-Maßnahme durch lokale Wärmeabfuhr wird im folgenden als aktive Kühlung bezeichnet, die zuletzt genannte Kühl-Maßnahme durch Wärmeabschirmung als passive Kühlung.

Die Maßnahmen zur aktiven und passiven Kühlung der Vorformoberfläche wirken vorallem lokal beschränkt in den Bereichen der jeweiligen Wendepunkte. Ihre Wirkung beruht entweder darauf, daß in den Bereichen um die Wendepunkte die Vorformoberfläche vor Wärme abgeschirmt wird, oder darauf, daß in diesen Bereichen Wärme von der Vorformoberfläche abgeleitet wird. In jedem Fall tragen die Kühl-Maßnahmen zu einer Homogenisierung der Oberflächentemperatur der Vorform bei. Im Idealfall ist die Wärmeabschirmung oder die Wärmeableitung gerade so groß, daß im Bereich der Wendepunkte die Temperaturerhöhung durch die Bewegung der Abscheidebrenner gerade kompensiert wird. Dichtegradienten in der Vorform werden dadurch vermieden oder vermindert.

Die Kühl-Maßnahmen sind den Wendepunkten der Brennerbewegung zugeordnet. Für den Fall, daß die Wendepunkte örtlich konstant sind, wirken auch die Kühl-Maßnahmen örtlich konstant, andernfalls - einhergehend mit einer Verschiebung der Wendepunkte - örtlich variabel.

Eine Besonderheit des erfindungsgemäßen Verfahrens besteht darin, daß die Kühl-Maßnahmen - zumindest innerhalb eines Bewegungszyklus der Brennerreihe - zeitlich konstant gehalten werden. Damit ist gemeint, daß eine gesteuerte oder geregelte Veränderung von Parametern der Kühl-Maßnahme, etwa in Abhängigkeit vom Bewegungszyklus der Brennerreihe, nicht erforderlich ist; der entsprechende Steuerungs- und Regelungsaufwand entfällt somit.

Die zeitliche Konstanz der Kühl-Maßnahmen bezieht sich nicht auf deren Effektivität. Diese kann zeitlich variabel sein, denn aktive oder passive Kühlung wirken umso stärker, je größer die abzuschirmende oder abführende Wärmemenge im Bereich eines Wendepunktes ist. Die jeweiligen Kühl-Maßnahmen sind daher gerade dann besonders effektiv, wenn die Abscheidebrenner die Vorform besonders stark erwärmen, das heißt, wenn sie die Bereiche um die Wendepunkte überstreichen.

Anstelle der Brennerreihe kann in kinematischer Umkehr der Träger zwischen den Wendepunkten hin- und herbewegt werden.

Bei einer aktiven Kühlung wird Wärme von der Vorformoberfläche im Bereich der Wendepunkte abgeführt. Die Wärme kann beispielsweise mittels Kühlelementen abgeführt werden, wie etwa flüssigkeits- oder gasgekühlten Bauteilen, die im Bereich der Wendepunkte wirken, oder durch Kühlgas-Ströme, die auf die Vorfomoberfläche in den Bereichen um die Wendepunkte gerichtet sind. Alternativ dazu kann die Wärme von den Bereichen um die Wendepunkte auch durch Wärmeleitung, Konvektion oder Strömung abgeleitet werden. Zur Erzeugung einer wirksamen Wärme-Konvektion oder Wärme-Strömung sind Strömungseinrichtungen vorzusehen, die im Bereich der Vorformoberfläche wirken.

Zur Erzeugung einer geeigneten Wärmeleitung, Wärme-Konvektion oder Wärme-Strömung hat sich eine Verfahrensweise besonders bewährt, bei der entlang der sich bildenden Vorform eine Wärmeabschirmung verläuft, die in den Bereichen um die Wendepunkte mit Wärmesenken, mittels denen Wärme lokal abgeführt wird, versehen ist. Durch die Wärmeabschirmung wird ein Wärmeverlust in den Bereichen zwischen den Wendepunkten vermindert. Dadurch staut sich die Wärme an der Vorformoberfläche in den Bereichen zwischen den Wendepunkten, während sie über die in den Bereichen um die Wendepunkte wirkenden Wärmesenken abgeführt wird. Die Wirkungen von Wärmeabschirmung zwischen den Wendepunkten einerseits und aktiver Kühlung durch die Wärmesenken um die Wendepunkte andererseits, verstärken und ergänzen sich somit.

Im einfachsten Fall wird die Wärme lokal über Wärmesenken in Form von Öffnungen in der Wärmeaschirmung abgeführt. Die Wärmeabschirmung erstreckt sich entlang der Vorform, wobei durch die Öffnungen in der Wärmeabschirmung Wärme aufgrund Strömung oder Konvektion nach außen abfließen kann. Beispielsweise können die Öffnungen in Form äquidistanter Schlitze in der Wärmeabschirmung ausgebildet sein.

Alternativ oder zusätzlich zu Öffnungen des Wärmeabschirmung sind in den Bereichen um die Wendepunkte Wärmesenken in Form Infrarotstrahlung absorbierender Flächenbereiche vorgesehen. Über die Infrarotstrahlung absorbierenden Flächenbereiche wird Wärme durch Wärmeleitung von der Vorformoberfläche nach außen abgeführt.

Hinsichtlich der Vorrichtung wird die oben angegebene Augfabe ausgehend von der eingangs beschriebenen Vorrichtung erfindungsgemäß dadurch gelöst, daß in den Bereichen um die Wendepunkte Wärmesenken vorgesehen sind.

Die Abscheidebrenner erzeugen entlang der Oberfläche der sich bildenden Vorform ein Temperaturprofil, das sich infolge der Flammentemperatur im Bereich der Oberfläche und der Hin- und Herbewegung der Brennerreihe einstellt. Dieses Temperaturprofil weist im Bereich der Wendepunkte Spitzen auf. Bei der erfindungsgemäßen Vorrichtung sind zur Vermeidung derartiger Spitzen im Bereich der Wendepunkte Wärmesenken vorgesehen, mittels denen Wärme von der Vorformoberfläche - im wesentlichen lokal auf den Bereich um die Wendepunkte beschränkt - abgeführt werden kann. Die Wärmesenken tragen so zu einer Homogenisierung der Oberflächentemperatur der Vorform bei. Im Idealfall ist die Wirkung der Wärmesenken gerade so, daß im Bereich der Wendepunkte die Temperaturerhöhung durch die Bewegung der Abscheidebrenner kompensiert wird. Dichtegradienten in der Vorform werden dadurch vermieden oder vermindert.

Die Wärmesenken sind den Wendepunkten der Brennerbewegung zugeordnet. Für den Fall, daß die Wendepunkte örtlich konstant sind, sind es auch die Wärmesenken, andernfalls sind sie - einhergehend mit einer Verschiebung der Wendepunkte - örtlich variabel. Anstelle der Abscheidebrenner kann in kinematischer Umkehr auch die Vorform zwischen den Wendepunkten hin- und herbewegt werden. In dem Fall werden die Wärmesenken mit der Vorfom bewegt.

Eine Besonderheit der erfindungsgemäßen Vorrichtung besteht darin, daß die Wärmesenken - innerhalb eines Bewegungsintervalls der Brennerreihe - zeitlich konstant gehalten werden können. Damit ist gemeint, daß eine gesteuerte oder geregelte Veränderung von Parametern der Wärmesenken, etwa in Abhängigkeit vom Bewegungszyklus der Brennerreihe, nicht erforderlich ist. Davon zu unterscheiden ist die Effektivität der Wärmesenken, die umso größer ist, je größer die abführende Wärmemenge im Bereich der Wendepunkte ist. Die Wärmesenken wirken daher gerade dann besonders effektiv, wenn die Abscheidebrenner die Vorform besonders stark erwärmen, das heißt, wenn sie die Bereiche um die Wendepunkte überstreichen.

In einer bevorzugten Weiterbildung der erfindungsgemäßen Vorrichtung verläuft entlang der sich bildenden Vorform mindestens eine Wärmeabschirmung, in der die Wärmesenken ausgebildet sind. Üblicherweise verläuft das Wärmeabschirmung mindestens entlang der gesamten nutzbaren Länge der Vorform (damit ist die Gesamtlänge der Vorform abzüglich eventuell vorhandener, sich verjüngender Vorformenden gemeint). Durch die Wärmeabschirmung soll ein Wärmeverlust in den Bereichen zwischen den Wendepunkten vermindert werden. Die Wärme wird an der Vorformoberfläche in den Bereichen zwischen den Wendepunkten gestaut, während sie über die Wärmesenken in den Bereichen um die Wendepunkte abgeführt wird. Wärmeabschirmung und Wärmesenken ergänzen und verstärken sich somit. Entsprechend dieser Wirkung und Funktion der Wärmeabschirmung können Form, Ausdehnung und Anordnung in bezug zur Vorform an die jeweiligen Gegebenheiten von einem Fachmann leicht angepaßt und optimiert werden. Eine sich nur über einen Teil des Umfanges der sich bildenden Vorfom erstreckende Wärmeabschirmung ist ausreichend, wobei vielfältige Formen möglich sind, beispielsweise als parallel zur Träger-Längsachse verlaufende, plane Scheibe oder einer um die Träger-Längsachse gebogene Halbschale.

Besonders einfach gestaltet sich die erfindungsgemäße Vorrichtung, bei der die Wärmesenken in Form von Öffnungen ausgebildet sind, die in der Wärmeabschirmung jeweils im Bereich eines Wendepunktes vorgesehen sind. Im einfachsten Fall erstreckt sich die Wärmeabschirmung als plane Scheibe entlang der sich bildenden Vorform, wobei durch Öffnungen der Scheibe Wärme aufgrund Strömung oder Konvektion nach außen abfließen kann. Beispielsweise können die Öffnungen in Form äquidistanter Schlitze in den Bereichen um die Wendepunkte ausgebildet sein.

Alternativ oder zusätzlich zu derartigen Öffnungen ist die sich entlang der Vorform erstreckende Wärmeabschirmung im Bereich der Wendepunkte mit Infrarotstrahlung absorbierenden Flächenbereichen versehen. Durch Wärmeleitung über die Infrarotstrahlung absorbierenden Flächenbereiche wird Wärme von der Vorformoberfläche weg, nach außen abtransportiert.

Als besonders geeignet haben sich Wärmesenken erweisen, die als Kühlelemente ausgebildet sind. Deratige Kühlelemente sind konstruktiv einfach zu gestalten, beispielsweise als Peltierelemente oder in Form flüssigkeits- oder gasgekühlter Bauteile oder als Düsen für ein Kühlgas, die auf die Vorformoberffläche im Bereich der Wendepunkte gerichtet sind.

Bei einer bevorzugten Ausführunsgform der erfindungsgemäßen Vorrichtung sind Wärmeabschirmung und Brennerreihe auf der gleichen Seite des Trägers angeordnet, wobei die Brennerreihe zwischen dem Träger und der Wärmeabschirmung verläuft. Bei dieser Anordnung schirmt die Wärmeabschirmung gleichzeitig den - von der Vorform aus gesehen - hinter der Brennereihe liegenden Bereich, beispielsweise eine Gehäusewandung, vor der Wärme der Abscheidebrenner ab.

Nachfolgend wird die Erfindung anhand eines Ausführungsbeispiels und einer Patentzeich-nung näher erläutert. In der Zeichnung zeigen in schematischer Darstellung im einzelnen:
- **Figur 1:**: eine Ausführungsform der erfindungsgemäßen Vorrichtung in einer Vorderansicht,
- **Figur 2:**: eine Ausführungsform eines Abschirmbleches zur Verwendung bei einer erfindungsgemäßen Vorrichtung in einer Vorderansicht,
- **Figur 3:**: das Abschirmblech gemäß Figur 2 in einer Seitenansicht,
- **Figur 4:**: eine weitere Ausführungsform eines Abschirmbleches zur Verwendung bei einer erfindungsgemäßen Vorrichtung in einer Vorderansicht,
- **Figur 5:**: das Abschirmblech gemäß Figur 4 in einer Seitenansicht,
- **Figur 6:**: eine weitere Ausführungsform der erfindungsgemäßen Vorrichtung in einer Seitenansicht und
- **Figur 7:**: eine weitere Ausführungsform der erfindungsgemäßen Vorrichtung in einer Seitenansicht.

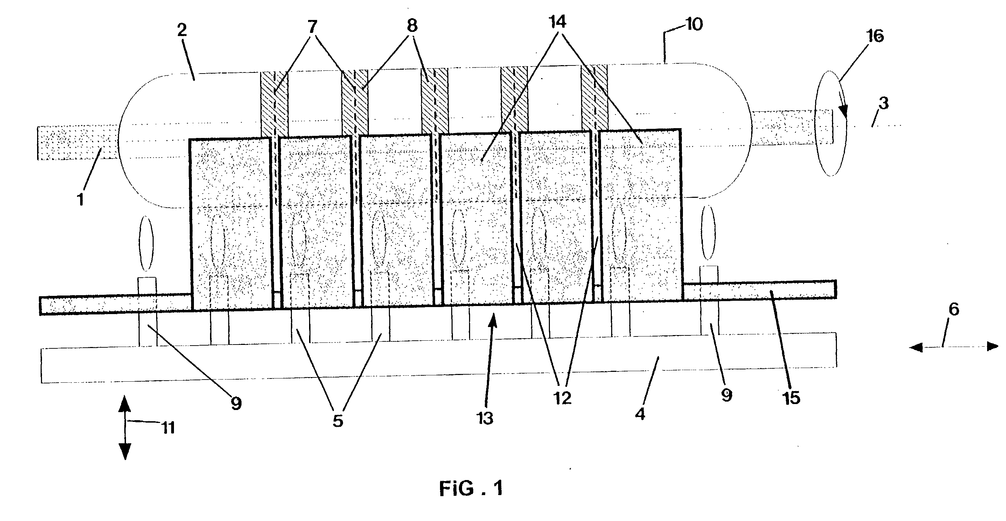

Bei der in Figur 1 schematisch dargestellten Vorrichtung ist Träger 1 aus Aluminiumoxid vorgesehen, der um seine Längsachse 3 rotierbar ist und auf dem eine poröse Vorform 2 aus SiO₂-Partikeln abgeschieden wird. Die vorteilhafte Rotationsrichtung des Trägers 1 zeigt der Richtungspfeil 16. Die Abscheidung der SiO₂-Partikel erfolgt mittels Abscheidebrennern 5 aus Quarzglas, die in einer Reihe auf einem parallel zur Längsachse 3 des Trägers 2 angeordneten Brennerblock 4 montiert sind. Der Brennerblock 4 wird dabei entlang der Längsachse 3 des Trägers 1 zwischen zwei, in bezug auf die Längsachse 3 ortsfesten Wendepunkten 7 hin- und herbewegt. Die Amplitude der Hin- und Herbewegung ist mittels des Richtungspfeiles 6 charakterisiert. Sie beträgt 20 cm und sie entspricht - in Richtung der Längsachse 3 gesehen-dem zweifachen Abstand der Abscheidebrenner 5 voneinander. Die Lage der Wendepunkte 7 in bezug auf die Vorformoberfläche ist konstant. Daher sind in Figur 1 die Wendepunkte 7 der Hin- und Herbewegung der einzelnen Abscheidebrenner 5 als Mittellinien schraffierter Flächenbereiche auf die Vorformoberfläche projiziert, wobei die Flächenbereiche jeweils den Bereich 8 um einen Wendepunkt 7 charakterisieren sollen. Der Brennerblock 4 ist mit einem (in Figur 1 nicht dargestellten) Antrieb verbunden, der die Hin- und Herbewegeung bewirkt.

Die Reihe der Abscheidebrenner 5 wird auf beiden Seiten durch jeweils einen Zusatzbrenner 9 abgeschlossen. Die Zusatzbrenner 9 sind ebenfalls auf dem Brennerblock 4 montiert, wobei ihr Abstand vom benachbarten Abscheidebrenner 5 jeweils dem oben genannten Brennerabstand entspricht. Die Flammentemperatur der Zusatzbrenner 9 wird auf etwa den gleiche Wert eingestellt wie diejenige der Abscheidebrenner 5. Sie dienen dazu, in den Randbereichen der Brennerreihe ein ähnliches Temperaturprofil zu erzeugen, wie in deren mittleren Bereich. Den Abscheidebrennern 5 werden jeweils als Brennergase Sauerstoff und Wasserstoff und als Ausgangsmaterial für die Bildung der SiO₂-Partikel gasförmiges SiCl₄ zugeführt. Die beiden Zusatzbrenner 9 werden lediglich mit den Brennergasen gespeist.

Der Abstand zwischen der Oberfläche 10 der Vorform 2 und dem Brennerblock 4 wird während der Abscheideprozesses konstant gehalten. Hierzu ist der Brennerblock 4 in einer Richtung senkrecht zur Längsachse 3 des Trägers 1 bewegbar, wie dies mit dem Richtungspfeil 11 angedeutet ist.

Erfindungsgemäß ist die Vorrichtung in den Bereichen 8 um die Wendepunkte 7 mit Wärmesenken für die Abfuhr von Wärme versehen. Die Wärmesenken sind bei der in Figur 1 dargestellten Ausführungsform als 30 mm breite Schlitze 12 in einem kammartigen Abschirmblech 13 ausgebildet, das sich ortsfest entlang der nutzbaren Länge der Vorform 2 erstreckt. Das kammartige Abschirmblech 13 besteht aus 1,5 mm dickem Edelstahl. Seine Höhe beträgt 300 mm. Das Abschirmblech 13 verläuft in einem Abstand von 350 mm tangential zur Zylindermantelfläche des Trägers 1, wobei die Unterkante des Abschirmbleches 13 etwa 50 mm unterhalb der Mittelachse 3 der Vorfom 2 beginnt. Zur Verdeutlichung des Zusammenhangs zwischen den Schlitzen 12 des Abschirmbleches 13 und den auf die Vorformoberfläche projizierten Bereichen 8 um die Brennerwendepunkte 7 zeigt die schematische Darstellung in Figur 1 eine davon unterschiedliche Anordnung von Vorform 2 und Abschirmblech 13 zueinander. Aufgrund der durchgehenden Schlitze 12 ist das Abschirmblech 13 in mehrere gleich große Blenden 14 unterteilt, die an einer gemeinsamen Leiste 15 gehalten werden.

Das Abschirmblech 13 ist, von der Vorform 2 aus gesehen, hinter der Reihe der Abscheidebrenner 5 angeordnet. Die Wendepunkte 7 der einzelnen Abscheidebrenner 5 liegen innerhalb der Projektion der Schlitze 12 auf die Vorform 2. Die Blenden 14 überdecken im wesentlichen die Bereiche zwischen den Wendepunkten 7. Sie tragen dazu bei, daß die von den Abscheidebrennern 5 erzeugte Wärme im Bereich der Vorform 2 gehalten wird, während die Schlitze 12, als Wärmesenken wirkend, einen Abfluß von Wärme im Bereich 8 der Wendepunkte 7 ermöglichen.

Nachfolgend wird ein Ausführungsbeispiel für das erfindungsgemäße Verfahren anhand Figur 1 erläutert:

Mittels der Abscheidebrenner 5 werden SiO₂-Partikel auf der Oberfläche 10 der rotierenden Vorform 2 abgeschieden. Die Abscheidebrenner 5 werden dabei entlang der Vorformoberfläche 10 in gleichen Bewegungszyklen zwischen örtlich konstanten Wendepunkten 7 hin- und herbewegt. Die Umfangsgeschwindigkeit der Vorform 2 ist während des gesamten Bewegungszyklus und während des gesamten Abscheide-Prozesses konstant auf 10 m/min eingestellt. Die mittlere Translationsgeschwindigkeit des Brennerblocks 4 beträgt 350 mm/min, und sie wird - abgesehen von Brems - bzw. Beschleunigungsstrecken im Bereich 8 der Wendepunkte 7, die für den Mittelwert der Translationsgeschwindigkeit vernachlässigbar sind - ebenfalls sowohl während des gesamten Bewegungszyklus, als auch während des gesamten Abscheide-Prozesses (vom Betrag her) konstant gehalten. Die Längen der Brems- bzw. Beschleunigungsstrecken liegen im Bereich weniger Millimeter.

Die Temperatur der Vorformoberfläche 10 wird kontinuierlich gemessen. Hierzu ist ein Pyrometer auf die Vorformoberfläche 10 gerichtet, dessen Meßfleck im Auftreffpunkt der Flamme eines der mittleren Abscheidebrenner 5 liegt. Das Pyrometer ist mit dem Brennerblock 4 verbunden und wird mit diesem hin- und herbewegt. Es handelt sich um ein Pyrometer der Firma IM-PAC mit der Bezeichnung "Infratherm IN 4/5", dessen Meßwellenlänge bei 5,14 um liegt. Der Abstand des Pyrometers von der Vorformoberfläche 10 beträgt 30 cm und der Durchmesser des Meßflecks ca. 5 mm. Der Auftreffpunkt der Flamme des Abscheidbrenners 5 hat einen Durchmesser von ca. 15 mm. Aus den so gewonnenen Meßwerten wird der Basiswert der Oberflächentemperatur als die niedrigste Temperatur bei einem Bewegungszyklus, also einer Hin- und Herbewegung des Brennerblocks 4 ermittelt. Auf der Vorformoberfläche 10 wird während der Abscheidung ein Basiswert der Oberflächentemperatur von ca. 1250 °C gemessen. Dabei ist zu beachten, daß die Oberfläche 10 mit zunehmendem Außendurchmesser der Vorform 2 u. a. aufgrund der zunehmenden Wärmeabstrahlung schneller abkühlt. Um den Basiswert der Oberflächentemperatur konstant auf etwa 1250 °C zu halten, sind daher Maßnahmen erforderlich, die dem schnelleren Abkühlen entgegenwirken. Hierzu wird im Ausführungsbeispiel die Flammentemperatur der Abscheidebrenner 5 kontinuierlich erhöht.

Die Umfangsgeschwindigkeit der Vorform 2 sowie die mittlere Translationsgeschwindigkeit des Brennerblocks 4 sind relativ klein. Aufgrunddessen ist auch die Geschwindigkeit der Relativbewegung zwischen den Abscheidebrennern 5 und der Vorformoberfläche 10 gering und es wird eine gute Durchwärmung der Vorform 2 im Bereich des Auftreffpunktes der Brennerflamme erreicht. Dieser Effekt wird durch die Wirkung des kammartigen Abschirmbleches 13 noch verstärkt. Denn insbesondere in denjenigen Zeitintervallen, während denen sich die Abscheidebrenner 5 - in der Darstellung gemäß Figur 1- hinter den Blenden 14 befinden, vermindern die Blenden 14 ein Abfließen der von den Abscheidebrennern 5 erzeugten Wärme nach hinten, von der Vorformoberfläche 10 weg. Demgegenüber wird die Abfuhr der von den Abscheidebrennern 5 erzeugten Wärme nach hinten erleichtert, sobald sich die Abscheidebrenner 5-in der Darstellung gemäß Figur 1- hinter den Schlitzen 12, das heißt, im Bereich 8 der Wendepunkte 7, befinden. Dadurch wird eine Temperaturerhöhung aufgrund des doppelten Aufheizens der Vorformoberfläche 10 durch die Hin- und Herbewegung im Bereich 8 der Wendepunkte 7 weitgehend vermieden. Im beschriebenen Ausführungsbeispiel wurde eine Temperaturerhöhung von lediglich 30 °C gemessen. Dadurch wird ein relativ flacher Verlauf der Oberflächentemperatur zwischen den Wendepunkten 7 und somit ein geringer Dichtegradient der Vorform 2 in diesem Bereich gewährleistet.

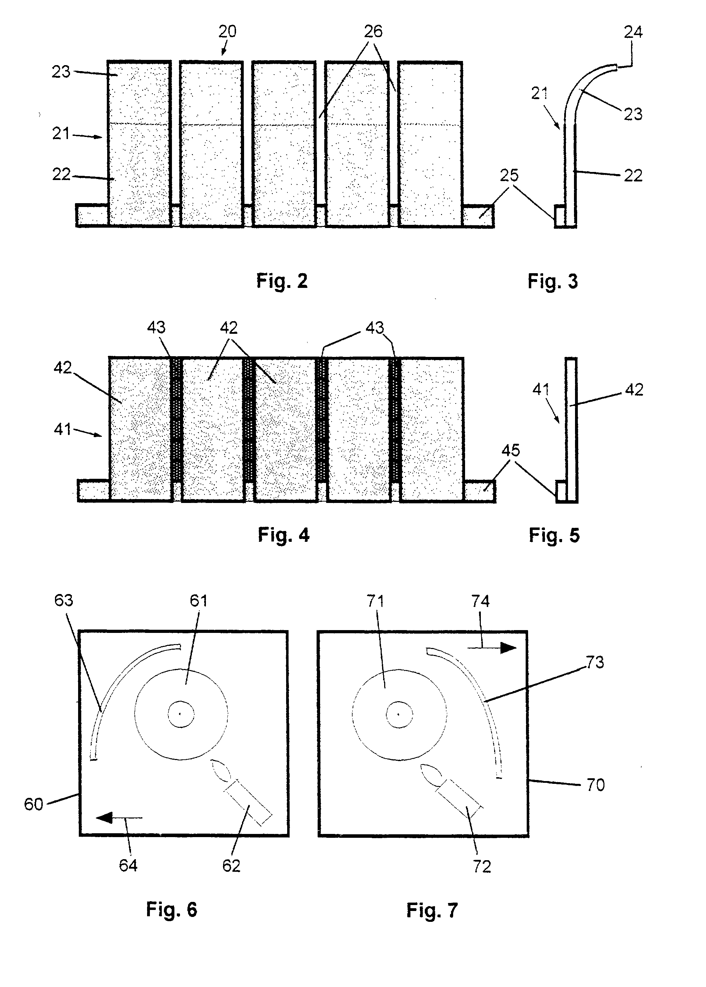

Nachfolgend werden weitere Ausführungsformen des oben erläuterten Abschirmbleches und dessen Anordnung in Vorrichtungen gemäß der Erfindung anhand der Figuren 2 bis 7 näher erläutert:

Die in den **Figuren 2 und 3** dargestellte Form eines Abschirmbleches 20 zur Verwendung in einer Vorrichtung gemäß der vorliegenden Erfindung besteht aus 1,5 mm dicken Blenden 21 aus Edelstahl, die einen unteren, ebenen Abschnitt 22 und einen oberen, konkav gebogenen Teilabschnitt 23 aufweisen. Der obere, gebogene Teilabschnitt 23 ist in etwa der Raumform einer Vorform nachgebildet. Die obere, freie Kante 24 des gekrümmten Teilabschnittes weist bei einem Einsatz des Abschirmbleches 21 in einer Vorrichtung gemäß der Erfindung in Richtung der Vorform. Die Blenden 21 werden an einer gemeinsamen Leiste 25 gehalten. Zwischen den Blenden sind durchgehende Schlitze 26 mit einer Breite von 40 mm vorgesehen.

Bei der Ausführungsform des Abschirmbleches gemäß den **Figuren 4 und 5** ist ein planes, 1 mm dickes Edelstahlblech 41 vorgesehen, das streifenförmig alternierend infrarote Strahlung reflektierende Flächenbereiche 42 und infrarote Strahlung absorbierende Flächenbereiche 43 aufweist. Die Höhe des Abschirmbleches beträgt 300 mm. Die Breite der absorbierend wirkenden Flächenbereiche 43 beträgt 50 mm. Die absorbierend wirkenden Flächenbereiche 42 dienen bei einem Einsatz des Abschirmbleches 42 in einer Vorrichtung gemäß der vorliegenden Erfindung als Wärmesenken. Sie sind hierzu im Bereich der Wendepunkte angeordnet. Das Edelstahlblech 41 wird an einer Leiste 45 gehalten.

Die Vorderansicht auf eine weitere Ausführungsform der Vorrichtung gemäß der vorliegenden Erfindung gemäß **Figur 6** zeigt in schematischer Darstellung ein Gehäuse 60, innerhalb dem eine Vorform 61, ein Brenner 62, der auf die Vorform gerichtet ist, und eine Wärmeabschirmung 63 angeordnet sind. Die Wärmeabschirmung 63, die unter Nachbildung der Raumform der Vorform 61 eine konkave Krümmung aufweist, ist auf der dem Brenner 62 gegenüberliegenden Seite der Vorform 61 angeordnet. Der Abstand zwischen der Wärmeabschirmung 63 und der sich bildenden Vorform 61 wird konstant auf einem Wert von 100 mm gehalten, indem die Wärmeabschirmung während des Aufbauprozesses der Vorform in Richtung des Richtungspfeiles 64 bewegt wird.

Die in **Figur 7** schematisch dargestellte Vorrichtung gemäß der Erfindung zeigt innerhalb eines Gehäuses 70 eine Anordnung von Vorform 71, Abscheidebrenner 72 und Abschirmung 73, wie sie bereits oben anhand der Figur 1 näher erläutert worden ist. Die Abscheidebrenner 72 befinden sich hierbei zwischen Vorform 71 und der Abschirmung 73. Im Ausführungsbeispiel beträgt der Abstand zwischen der Vorformoberfläche und der Abschirmung 200 mm. Der Abstand wird konstant gehalten, indem während des Prozesses die Abschirmung 73 in Richtung des Richtungspfeiles 74 bewegt wird.

Mittels des erfindungsgemäßen Verfahrens lassen sich Temperaturspitzen im Bereich der Wendepunkte der Brennerbewegung vermeiden, ohne daß hierfür ein hoher apparativer oder regelungstechnischer Aufwand erforderlich ist.

## Patentansprüche

1. Verfahren zur Herstellung einer länglichen, porösen SiO₂-Vorform (2), durch Abscheiden von SiO₂-Partikeln auf der Zylindermantelfläche (10) eines um seine Längsachse (3) rotierenden, zylinderförmigen Trägers (1), wobei die SiO₂-Partikel mittels einer Vielzahl von Abscheidebrennern (5) gebildet werden, die in mindestens einer parallel zur Längsachse (3) des Trägers (1) verlaufenden Brennerreihe beabstandet voneinander angeordnet, zwischen Wendepunkten (7), an denen sich ihre Bewegungsrichtung umkehrt, in einem sich wiederholenden Bewegungszyklus entlang der sich bildenden Vorform (2) hin- und herbewegt werden, wobei Maßnahmen zur Vermeidung oder Verminderung einer Überhitzung der sich bildenden Vorform in den Bereichen (8) um die Wendepunkte (7) getroffen werden, dadurch gekennzeichnet, daß die Maßnahmen ein lokales Abführen von Wärme aus den Bereichen (8) um die Wendepunkte (7), oder ein lokales Abschirmen der Bereiche (8) um die Wendepunkte (7) vor Wärme umfassen, und innerhalb eines Bewegungszyklus zeitlich konstant gehalten werden.

2. Verfahren nach Anspruch 1, dadurch gekennzeichnet, daß entlang der sich bildenden Vorform (2) eine Wärmeabschirmung (13) verläuft, die in den Bereichen (8) um die Wendepunkte (7) mit Wärmesenken, mittles denen Wärme lokal abgeführt wird, versehen ist.

3. Verfahren nach Anspruch 2, dadurch gekennzeichnet, daß die Wärme lokal über Wärmesenken in Form von Öffnungen (12) in der Wärmeaschirmung (13) abgeführt wird.

4. Verfahren nach Anspruch 2 oder 3, dadurch gekennzeichnet, daß die Wärme lokal über Wärmesenken in Form von Infrarotstrahlung absorbierender Flächenbereiche (43) der Wärmeaschirmung (13) abgeführt wird.

5. Vorrichtung für die Herstellung einer porösen SiO₂-Vorform (2), mit einem um seine Längsachse (3) rotierbaren, zylinderförmigen Träger (1), mit einer Vielzahl von Abscheidebrennern (5), die in mindestens einer, parallel zur Längsachse (3) des Trägers (1) verlaufenden Brennerreihe beabstandet voneinander angeordnet und miteinander verbunden sind, und mittels denen SiO₂-Partikel auf dem Träger unter Bildung der Vorform abgeschieden werden, und mit einer Verschiebeeinrichtung, mittels der die Abscheidebrenner (5) entlang des Trägers (1) zwischen Wendepunkten (7), an denen sich ihre Bewegungsrichtung umkehrt, hin- und herbewegt werden, dadurch gekennzeichnet, daß in den Bereichen (8) um die Wendepunkte (7) Wärmesenken (12) vorgesehen sind.

6. Vorrichtung nach Anspruch 5, dadurch gekennzeichnet, daß entlang der sich bildenden Vorform (2) mindestens eine Wärmeabschirmung (13) verläuft, in der die Wärmesenken (12) ausgebildet sind.

7. Vorrichtung nach Anspruch 6, dadurch gekennzeichnet, daß die Wärmesenken in Form von Öffnungen (12) ausgebildet sind, die in der Wärmeabschirmung (13) im Bereich (8) der Wendepunkte (7) vorgesehen sind.

8. Vorrichtung nach Anspruch 6 oder 7, dadurch gekennzeichnet, daß die Wärmesenken in Form Infrarotstrahlung absorbierender Flächenbereiche (43) ausgebildet sind, die in der Wärmeabschirmung (13) im Bereich (8) der Wendepunkte (7) vorgesehen sind.

9. Vorrichtung nach Anspruch 5 oder 6, dadurch gekennzeichnet, daß die Wärmesenken als Kühlelemente ausgebildet sind.

10. Vorrichtung nach einem der Ansprüche 5 bis 9, dadurch gekennzeichnet, daß Wärmeabschirmung (13) und Brennerreihe (4) auf der gleichen Seite des Trägers (1) angeordnet sind, wobei die Brennerreihe (4) zwischen Träger (1) und Wärmeabschirmung (13) verläuft.

## Claims

1. A method for the production of a longish, porous SiO₂-preform (2) by depositing SiO₂- particles on the lateral cylinder surface (10) of a cylindrical carrier (1) rotating along its longitudinal axis (3), while the SiO₂-particles are formed by means of a plurality of depositing burners (5) that are arranged in at least one burner row parallel to the longitudinal axis (3) of the carrier (1), the burners keeping a distance to each other, and which are moved between turning points (7), at which their moving direction turns around, along the forming preform (2) in a repeating motion cycle, while measures are taken to avoid or diminish an overheating of the forming preform in the regions (8) around the turning points (7), wherein the measures comprise a local dissipation of heat out of the regions (8) around the turning points (7) or a local heat protection of the regions (8) around the turning points (7), the measures keeping constant in time within a motion cycle.

2. A method claimed in claim 1, wherein a heat protecting means (13) is arranged along the forming preform (2), which is provided with heat sinks in the regions (8) around the turning points (7) by means of which heat is locally dissipated.

3. A method claimed in claim 2, wherein the heat is locally dissipated over heat sinks in the form of openings (12) in the heat protecting means (13).

4. A method claimed in claim 2 or 3, wherein the heat is locally dissipated over heat sinks in the form of surface regions (43) of the heat protecting means (13) absorbing infrared radiation.

5. An apparatus for the production of a porous SiO₂-preform (2) having a cylindrical carrier (1), which is rotatable along its longitudinal axis (3), and a plurality of depositing burners (5) that are arranged in at least one burner row parallel to the longitudinal axis (3) of the carrier (1), the bumers keeping a distance to each other and being connected to each other, and by means of which SiO₂- particles are deposited on the carrier by forming the preform, and having a sliding device by means of which the depositing burners (5) are moved along the carrier (1) between turning points (7), at which their moving direction turns around, wherein the regions (8) around the turning points (7) are provided with heat sinks (12).

6. An apparatus claimed in claim 5, wherein along the forming preferm (2) at least one heat protecting means (13) is arranged in which the heat sinks (12) are provided.

7. An apparatus claimed in claim 6, wherein the heat sinks are formed in the form of openings (12), which are provided in the heat protecting means (13) in the region (8) of the turning points (7).

8. An apparatus claimed in claim 6 or 7, wherein the heat sinks are formed in the form of surface regions (43) absorbing infrared radiation, which are provided in the heat protecting means (13) in the region (8) of the turning points (7).

9. An apparatus claimed in claim 5 or 6, wherein the heat sinks are formed as cooling elements.

10. An apparatus claimed in one of the claims 5 to 9, wherein heat protecting means (13) and burner row (4) are arranged on the same side of the carrier (1), while the burner row (4) is arranged between carrier (1) and heat protecting means (13).

## Revendications

1. Procédé pour la fabrication d'une préforme SiO₂ poreuse allongée (2) par précipitation de particules SiO₂ sur la surface d'enveloppe cylindrique (10) d'un support cylindrique (1) tournant autour de son axe longitudinal (3), les particules SiO₂ étant formées au moyen d'un grand nombre de brûleurs (5) de précipitation qui sont disposés à distance les uns des autres sur au moins une rangée de brûleurs s'étendant parallèlement à l'axe longitudinal (3) du support (1), qui se déplacent en va-et-vient entre des points d'inversion (7) où leur direction de déplacement s'inverse dans un cycle de déplacement répétitif le long de la préforme en formation (2), des mesures étant prises pour éviter ou minimiser une surchauffe de la préforme en formation dans les zones (8) autour des points d'inversion (7), caractérisé en ce que les mesures comprennent une évacuation locale de la chaleur hors des zones (8) autour des points d'inversion (7) ou un écran local de chaleur des zones (8) autour des points d'inversion (7) contre la chaleur et sont maintenues constantes dans le temps à l'intérieur d'un cycle de déplacement.

2. Procédé selon la revendication 1, caractérisé en ce que le long de la préforme (2) en formation s'étend un écran de chaleur (13) qui est muni dans les zones (8) autour des points d'inversion (7) de puits de chaleur qui dissipent localement la chaleur.

3. Procédé selon la revendication 2, caractérisé en ce que la chaleur est dissipée localement par des puits de chaleur sous forme d'ouvertures (12) dans l'écran de chaleur (13).

4. Procédé selon la revendication 2 ou 3, caractérisé en ce que la chaleur est dissipée localement par des puits de chaleur sous forme de zones de surface (43) absorbant le rayonnement infrarouge de l'écran de chaleur (13).

5. Dispositif pour la fabrication d'une préforme SiO₂ poreuse allongée (2)) d'un support cylindrique (1) tournant autour de son axe longitudinal (3), comprenant un grand nombre de brûleurs de précipitation (5) qui sont disposés à distance les uns des autres sur au moins une rangée de brûleurs s'étendant parallèlement à l'axe longitudinal (3) du support (1), et qui sont reliés entre eux et au moyen desquels les particules de SiO₂ sont précipitées sur le substrat en formant la préforme et avec un dispositif de déplacement au moyen duquel les brûleurs de précipitation (5) sont déplacés en va-et-vient le long du substrat (1) entre des points d'inversion (7) où s'inverse leur direction de déplacement, caractérisé en ce que dans les zones (8) autour des points d'inversion (7), il est prévu des puits de chaleur (12).

6. Dispositif selon la revendication 5, caractérisé en ce que le long de la préforme en formation (2) s'étend au moins un écran de chaleur (13) dans lequel sont ménagés les puits de chaleur (12).

7. Dispositif selon la revendication 6, caractérisé en ce que les puits de chaleur ont la forme d'ouvertures (12) qui sont prévues dans l'écran de chaleur (13) dans la zone (8) des points d'inversion (7).

8. Dispositif selon la revendication 6 ou 7, caractérisé en ce que les puits de chaleur sont aménagés comme des zones de surface (43) absorbant le rayonnement infrarouge qui sont prévues dans l'écran de chaleur (13) dans la zone (8) des points d'inversion (7).

9. Dispositif selon la revendication 5 ou 6, caractérisé en ce que les puits de chaleur sont réalisés comme des éléments de refroidissement.

10. Dispositif selon l'une des revendications 5 à 9, caractérisé en ce que l'écran de chaleur (13) et la rangée de brûleur (4) sont disposés sur le même côté du substrat (1), la rangée de brûleur (4) s'étendant entre le substrat (1) et l'écran de chaleur (13).
